# FASCICULE DE BREVET EUROPEEN

(11) **EP 0 868 657 B1**
(45) Date de publication et mention de la délivrance du brevet: **24.05.2000**
(21) Numéro de dépôt: 96942421.7
(22) Date de dépôt: 18.12.1996
(51) Int. Cl.: G01K 7/22

(54) **CAPTEUR DE TEMPERATURE COMPRENANT UN SUPPORT DE THERMISTANCE PERFECTIONNE**
TEMPERATURSENSOR MIT VERBESSERTER THERMISTORUNTERSTÜTZUNG
TEMPERATURE SENSOR INCLUDING AN IMPROVED THERMISTOR HOLDER

(30) Priorité: 19.12.1995 FR 9515043
(43) Date de publication de la demande: 07.10.1998
(73) Titulaire: SC2N, 78180 Montigny-le-Bretonneux (FR)
(72) Inventeur: RAMOND, Daniel, F-14210 Evrecy (FR)
(74) Mandataire: Texier, Christian
(86) Numéro de dépôt international: FR9602017
(87) Numéro de publication internationale: WO9722862

(56) Documents cités:
- EP-A- 0 508 379
- DE-A- 3 234 059
- FR-A- 2 699 673
- US-A- 4 243 287

## Description

La présente invention concerne le domaine des capteurs de température.

La présente invention s'applique en particulier aux capteurs de température pour véhicules automobiles.

De nombreux capteurs de température ont déjà été proposés.

En particulier, on a proposé des capteurs de température comprenant une thermistance, un support conçu pour recevoir la thermistance et des lames de connexion, et un surmoulage de protection.

Le but de la présente invention est de perfectionner les capteurs de température connus.

Ce but est atteint selon la présente invention grâce à un capteur de température du type comprenant une thermistance, un support conçu pour recevoir la thermistance et les lames de connexion, caractérisé par le fait que le support définit des moyens de réception et de guidage des soies de la thermistance, qui divergent entre eux, pour positionner les soies sensiblement au centre de la plage de fixation des soies sur les lames de connexion.

Selon une autre caractéristique avantageuse de l'invention, les moyens de réception et de guidage comprennent des canaux parallèles et des rampes divergentes.

D'autres caractéristiques, buts et avantages de la présente invention apparaîtront à la lecture de la description détaillée qui va suivre, et en regard des dessins annexés donnés à titre d'exemple non limitatif et sur lesquels :
- les figures 1 et 2 représentent deux vues latérales orthogonales entre elles d'une ébauche de capteur de température conforme à la présente invention,
- les figures 3 et 4 représentent deux vues similaires d'une ébauche conforme à une autre variante de réalisation de l'invention,
- la figure 5 représente une vue en coupe longitudinale d'un support de thermistance utilisé dans un capteur conforme à la présente invention,
- la figure 6 représente une vue latérale d'une lame de connexion utilisée dans un capteur conforme à la présente invention,
- la figure 7 représente une vue partielle en bout d'un support équipé d'une thermistance conforme à la présente invention, et
- les figures 8 et 9 représentent deux vues schématiques en perspective d'une ébauche de capteur de température conforme à la présente invention à deux stades différents de son processus de fabrication.

On a représenté sur les figures annexées, un ensemble ou ébauche destiné à former un capteur de température.

Pour l'essentiel, l'ensemble illustré sur les figures annexées, comprend un support 100, une thermistance 200 et deux lames de connexion 300.

La thermistance 200 peut faire l'objet de divers modes de réalisation. Il s'agit de préférence de thermistances classiques disponibles dans le commerce comprenant un bulbe 210 et deux soies de connexion 220, 222.

Le bulbe 210 peut être par exemple globalement sphérique, typiquement d'un diamètre de l'ordre de 2mm.

Les deux soies de connexion 220, 222 sont formées de fils métalliques, de préférence parallèles entre eux à la sortie du bulbe 210. L'écart entre les deux soies 220, 222 est typiquement de l'ordre de 1mm et leur longueur de l'ordre de 15mm.

Le support 100 est réalisé de préférence en matière électriquement isolante, typiquement en matériau thermoplastique.

Le support 100 peut faire l'objet de nombreuses configurations, notamment en fonction de la géométrie de l'environnement.

Selon le mode de réalisation particulier et non limitatif illustré sur les figures annexées, le support 100 comprend une embase 110 et un fut 150.

Le support 100 est centré sur un axe 102.

L'embase 110 peut en particulier faire l'objet de nombreuses variantes. Selon la représentation donnée sur les figures annexées, elle présente une section globalement cruciforme vue dans un plan perpendiculaire à l'axe 102.

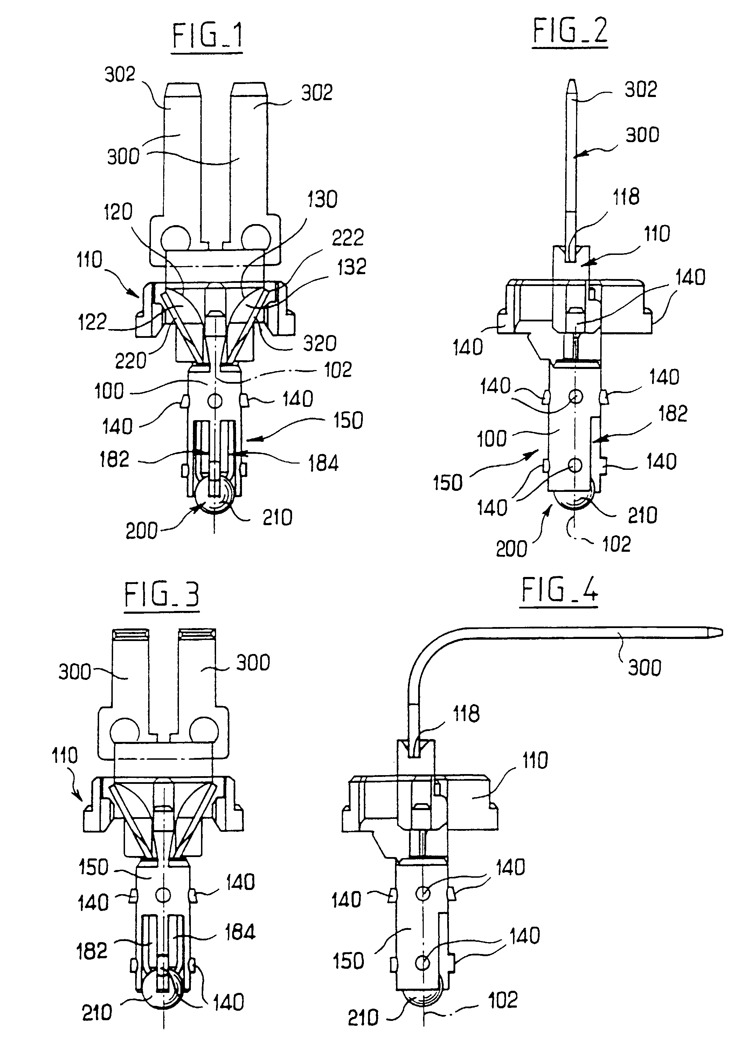

Le support 100 possède un plan de symétrie principal passant par l'axe 102. Ce plan de symétrie principal est orthogonal au plan des figures 1 et 3 et parallèle au plan des figures 2 et 4.

L'embase 110 possède deux canaux 112, 114, respectivement de part et d'autre du plan de symétrie principal précité, pour recevoir les lames de connexion 300.

A cette fin, la section des canaux 112, 114 est complémentaire de la section droite des lames 300, soit de préférence rectangulaire.

Les canaux 112, 114 s'étendent parallèlement à l'axe 102 et traversent l'embase 110.

De préférence, les lames 300 sont engagées sur l'embase 110 par l'extrémité de l'embase opposée au fut 150.

L'extrémité avant 111 de l'embase 110 est reliée au fut 150 par une poutre longitudinale 190.

Comme on le voit sur les figures annexées, les lames 300 émergent sur l'extrémité avant de l'embase 110. De plus, à ce niveau, les deux faces des lames 300 sont accessibles.

De préférence, il est prévu des moyens définissant une position univoque entre les lames 300 et le support 100.

Ces moyens sont formés de préférence de butées mécaniques limitant l'engagement des lames 300 dans l'embase 110.

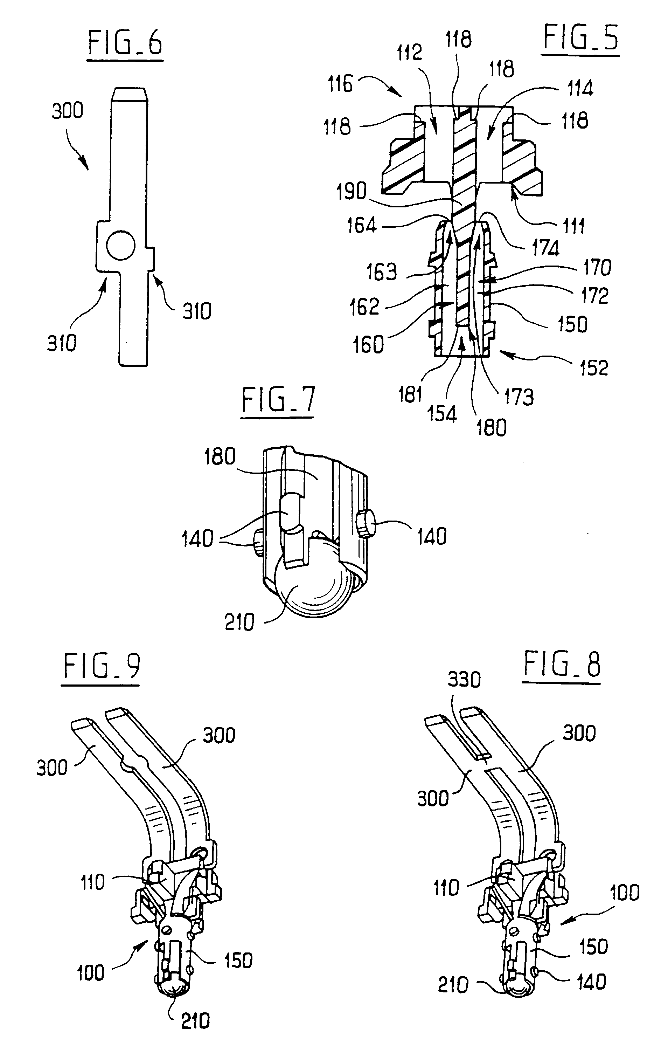

Pour cela, comme on le voit notamment sur la figure 6, les lames 300 peuvent être pourvues de décrochements 310 sur leur largeur. En outre, l'embase 110 définit elle-même sur sa surface arrière 116 opposée au fut 150, des plans d'appui 118 perpendiculaires à l'axe 102, complémentaires des décrochements 310 prévus sur la lame 300.

Le fut 150 présente des évidements internes.

Plus précisément, le fut 150 définit tout d'abord sur son extrémité 152 opposée à l'embase 110, un berceau 154 de réception du bulbe 210 de thermistance. Ce berceau 154 peut faire l'objet de diverses variantes de réalisation. Le berceau 152 peut être formé de différentes languettes axiales équiréparties autour de l'axe 102 et délimitées par des lumières longitudinales formées dans la paroi du fut 150. En variante, comme illustré sur les figures annexées, le berceau 154 peut être défini simplement par une creusure prévue sur l'extrémité axiale du fut 150.

Le fut 150 possède en outre deux canaux 160, 170 pour la réception des soies 220, 222. Ces canaux 160, 170 débouchent sur la surface avant de l'embase 110, soit en regard de l'extrémité avant des lames 300.

Plus précisément, de préférence, chaque canal 160, 170 possède une partie principale 162, 172, adjacente au berceau 154, prolongée vers l'arrière par un canal secondaire 164, 174, de plus faible section, complémentaire du diamètre des soies 220, 222 pour guider celles-ci avec précision, et qui débouchent sur la surface avant de l'embase 110. Ces canaux 160, 170 sont parallèles entre eux et parallèles à l'axe 102. De préférence, la zone de transition entre la partie principale 162, 172 et secondaire 164, 174 est définie par un cône 163, 173 effilé vers l'embase 110, facilitant l'engagement de soies 220, 222 dans la partie secondaire 164, 174 des canaux précités.

On notera qu'il est ainsi défini un muret 180 central entre les canaux 160, 170. Le muret central 180 définit une parfaite isolation électrique entre les soies 220, 222.

Pour faciliter l'engagement de ces soies 220, 222, dans les canaux 160, 170, comme on le voit notamment sur les figures 1 et 3, on peut prévoir des fenêtres latérales 182, 184 débouchant dans lesdits canaux 160, 170, dans la partie avant du fut 150.

La largeur de ces fenêtres latérales 182, 184 est avantageusement égale au diamètre de parties principales 162, 172 des canaux 160, 170.

En outre, il est prévu sur l'embase 110 des rampes divergentes 120,130.

La fonction de ces rampes 120, 130 est de faire diverger l'extrémité libre des soies 220, 222 émergeant des canaux 160, 170, vers le centre des zones de fixation prévues sur les lames 300.

Selon le mode de réalisation particulier et non limitatif représenté sur les figures annexées, les rampes divergentes 120, 130 sont formées de surfaces en quart de cylindre. Celles-ci tangentent la poutre centrale 190 sur leur extrémité avant et divergent en éloignement du fût 150.

Le bord avant de l'embase 110 situé en regard de ces rampes 120, 130 est de préférence délimité par des facettes 122, 132 inclinées par rapport à un plan passant par l'axe 102 et orthogonale au plan de symétrie principale précité. Ces facettes 122, 132 divergent par rapport au plan axial en question, en éloignement du fut 150 de sorte qu'elles affleurent le contour d'ouverture des canaux 112, 114.

L'homme de l'art comprendra aisément que lors de l'engagement de la thermistance 200 sur le support 100, les soies 220, 222 restent parallèles entre elles tant qu'elles sont déplacées dans les canaux 160, 170. En revanche, lorsque les extrémités arrières des soies 220, 222 atteignent les rampes 120, 130, ces soies 220, 222 sont sollicitées en écartement, comme on le voit notamment sur les figures 1 et 3, de sorte qu'elles viennent chevaucher le centre de l'extrémité avant des lames 300. On peut alors fixer les soies 220, 222 sur cette extrémité avant des lames 300 par tout moyen approprié, par exemple par microsoudage par point en opposition, comme cela est bien connu de l'homme de l'art.

Sur les figures 1 et 3, on a référencé 320 les points de soudure des soies 220, 222 sur les lames 300.

On notera que la position axiale de la thermistance 200 sur le support 100 est définie lorsque le bulbe 210 repose contre le fond du berceau, c'est-à-dire, de préférence, lorsque le bulbe 210 repose sur le sommet ou extrémité axiale avant 181 du muret 180.

Comme on le note sur les figures annexées, de préférence, le support 100 est muni, tant au niveau du fut 150 que l'embase 110, de pions 140 en saillie vers l'extérieur, conçus pour assurer un positionnement du support dans un moule et permettre le surmoulage autour du support 100 d'un corps de protection en matériau thermoplastique. Celui-ci n'a pas été représenté sur les figures annexées pour simplifier l'illustration. Il peut faire l'objet de nombreuses variantes.

De préférence, ce corps de protection surmoulé porte des structures de fixation par encliquetage.

Il est également de préférence adapté pour définir un corps de connecteur autour de l'extrémité arrière 302 des lames de connexion 300.

Ces lames de connexion 300 peuvent faire l'objet de nombreuses configurations.

Elles peuvent être par exemple rectilignes comme illustré sur les figures 1 et 2, ou encore incurvées, parallèlement au plan de symétrie principal comme illustré sur les figures 3 et 4, ou encore perpendiculairement à ce plan.

On a illustré sur les figures 8 et 9, la possibilité d'utiliser deux lames 300 reliées à l'origine par un pontet de liaison 330 (voir figure 8) susceptible d'être supprimé (voir figure 9) par découpe ou usinage, après fixation des soies 220, 222 de la thermistance.

En particulier, alors que selon les modes de réalisation décrits précédemment, les canaux 160, 170 présents dans le fut 150 sont parallèles entre eux, on peut prévoir en variante des canaux 160, 170 et/ou faces latérales du muret central 180 divergeant vers l'arrière pour imposer une certaine divergence aux soies 220, 222 à l'intérieur du fut 150.

## Revendications

1. Capteur de température, en particulier pour véhicules automobiles comprenant une thermistance (200), un support (100) conçu pour recevoir la thermistance et des lames de connexion (300),
caractérisé par le fait que le support (100) définit des moyens (160, 170, 120, 130) de réception et guidage des soies (220, 222) de la thermistance (200), qui divergent entre eux, pour positionner les soies (220, 222) sensiblement au centre de la plage de fixation des soies (220, 222) sur les lames de connexion (300).

2. Capteur selon la revendication 1, caractérisé par le fait que les moyens de réception et de guidage sont formés de canaux (160, 170) au moins sensiblement parallèles entre eux et de rampes divergentes (120, 130).

3. Capteur selon l'une des revendications 1 ou 2, caractérisé par le fait que le support (100) possède une embase arrière (110) et un fut avant (150) de plus faible section.

4. Capteur selon la revendication 3, caractérisé par le fait que l'embase est munie de deux canaux traversant (112, 114) conçus pour recevoir des lames de connexion (300).

5. Capteur selon l'une des revendications 4 ou 5, caractérisé par le fait que l'embase (110) définit une butée (118) pour les lames de connexion (300).

6. Capteur selon l'une des revendications 3 à 5, caractérisé par le fait que le fut (150) définit un berceau (154) de réception du bulbe (210) de thermistance.

7. Capteur selon l'une des revendications 1 à 6, caractérisé par le fait que les moyens de réception et de guidage définissent des canaux principaux (162, 172) adjacents à l'extrémité avant du fut (150), de forte section prolongés vers l'arrière et par l'intermédiaire de zones de transition coniques (163, 173) par des canaux secondaires (164, 174) de section complémentaire de celles des soies (220, 222) de la thermistance.

8. Capteur selon l'une des revendications 1 à 7, caractérisé par le fait que le support (100) définit un muret central électriquement isolant (180) entre les soies (220, 222) de la thermistance.

9. Capteur selon l'une des revendications 1 à 8, caractérisé par le fait qu'il comprend des rampes de sollicitation (120, 130) en forme de quart de cylindre.

10. Capteur selon l'une des revendications 1 à 9, caractérisé par le fait qu'il comprend en regard de rampes de sollicitation (120, 130) des facettes (122, 132) inclinées, susceptibles de servir d'appui aux soies (220, 222) de la thermistance et qui viennent effleurer l'extrémité avant de canaux (112, 114) formés dans une embase (110) pour recevoir des lames de connexion (300).

11. Capteur selon l'une des revendications 1 à 10, caractérisé par le fait que les soies (220, 222) de la thermistance sont fixées sur des lames de connexion (300) par microsoudage.

12. Capteur selon l'une des revendications 1 à 11, caractérisé par le fait que le support (100) est muni de pions (140) en saillie sur sa surface extérieure pour le positionnement dans un moule.

13. Capteur selon l'une des revendications 1 à 12, caractérisé par le fait qu'il comprend un corps de protection surmoulé sur le support (100).

14. Capteur selon l'une des revendications 1 à 13, caractérisé par le fait que le support (100) définit un muret central entre les soies (220, 222) de la thermistance, et adapté pour servir de butée en bulbe (210) de celle-ci.

## Claims

1. A temperature sensor, in particular motor vehicles, the sensor being of the type comprising a thermistor (200), a support (100) designed to receive the thermistor, and connection blades (300), the sensor being characterized by the fact that the support (100) defines diverging means (160, 170, 120, 130) for receiving and guiding connection tabs (220, 222) of the thermistor (200), to position the tabs (220, 222) substantially in the centers of the tab-fixing areas on the connection blades (300).

2. A sensor according to claim 1, characterized by the fact that the receiving and guiding means are formed by channels (160, 170) that are at least substantially parallel to each other, and by diverging ramps (120, 130).

3. A sensor according to claim 1 or 2, characterized by the fact that the support (100) possesses a rear base member (110) and a front shank (150) of smaller section.

4. A sensor according to claim 3, characterized by the fact that the base member is provided with two through channels (112, 114) designed to receive the connection blades (300).

5. A sensor according to claim 4 or 5, characterized by the fact the base member (110) defines an abutment (118) for the connection blades (300).

6. A sensor according to any one of claims 3 to 5, characterized by the fact that the shank (150) defines a cradle (154) for receiving the bulb (210) of the thermistor.

7. A sensor according to any one of claims 1 to 6, characterized by the fact that the receiving and guiding means define main channels (162, 172) adjacent to the front end of the shank (150), that are of large section extended rearwards and via conical transition zones (163, 173) by secondary channels (164, 174) of section complementary to the sections of the tabs (220, 222) of the thermistor.

8. A sensor according to any one of claims 1 to 7, characterized by the fact that the support (100) defines an electrically insulating central wall (180) between the tabs (220, 222) of the thermistor.

9. A sensor according to any one of claims 1 to 8, characterized by the fact that it comprises urging ramps (120, 130) in the form of quarter-cylinders.

10. A sensor according to any one of claims 1 to 9, characterized by the fact that facing urging ramps (120, 130), it comprises sloping facets (122, 132) suitable for serving as bearing surfaces for the tabs (220, 222) of the thermistor and coming flush with the front ends of the channels (112, 114) formed through a base member (110) for receiving the connection blades (300).

11. A sensor according to any one of claims 1 to 10, characterized by the fact that the tabs (220, 222) of the thermistor are fixed to the connection blades (300) by microwelding.

12. A sensor according to any one of claims 1 to 11, characterized by the fact that the support (100) is provided with pegs (140) projecting from its outside surface to position it in a mold.

13. A sensor according to any one of claims 1 to 12, characterized by the fact that it comprises a protective body overmolded on the support (100).

14. A sensor according to any one of claims 1 to 13, characterized by the fact that the support (100) defines a central wall between the tabs (220, 222) of the thermistor, and adapted to serve as an abutment for the bulb (210) thereof.

## Patentansprüche

1. Temperaturfühler, besonders für Kraftfahrzeuge, mit einem Temperatursensor (200) und einem Träger (100), der dazu konzipiert ist, den Temperatursensor und Anschlußzungen (300) aufzunehmen,
dadurch gekennzeichnet, daß der Träger (100) Mittel (160, 170, 120, 130) zur Aufnahme und Führung der Anschlußdrähte (220, 222) des Temperatursensor (200) bildet, die voneinander divergieren, um die Anschlußdrähte (220, 222) im wesentlichen in der Mitte des Befestigungsbereiches der Anschlußdrähte (220, 222) auf den Anschlußzungen (300) anzuordnen.

2. Fühler nach Anspruch 1, dadurch gekennzeichnet, daß die Mittel zur Aufnahme und Führung aus Kanälen (160, 170), die mindestens im wesentlichen zueinander parallel sind, und aus divergierenden Rampen (120, 130) gebildet sind.

3. Fühler nach einem der Ansprüche 1 oder 2, dadurch gekennzeichnet, daß der Träger (100) einen hinteren Ansatz (110) und einen vorderen Schaft (150) mit kleinerem Querschnitt aufweist.

4. Fühler nach Anspruch 3, dadurch gekennzeichnet, daß der Ansatz mit zwei querverlaufenden Kanälen (112, 114) versehen ist, die dazu konzipiert sind, die Anschlußzungen (300) aufzunehmen.

5. Fühler nach einem der Ansprüche 4 oder 5, dadurch gekennzeichnet, daß der Ansatz (110) einen Anschlag (118) für die Anschlußzungen (300) bildet.

6. Fühler nach einem der Ansprüche 3 bis 5, dadurch gekennzeichnet, daß der Schart (150) einen Aufnahmekäfig (154) für den Temperatursensorkörper (210) bildet.

7. Fühler nach einem der Ansprüche 1 bis 6, dadurch gekennzeichnet, daß die Mittel zur Aufnahme und Führung Hauptkanäle (162, 172) bilden, die dem vorderen Ende des Schaftes (150) mit kräftigem Querschnitt benachbart sind und nach hinten und mittels konischer Übergangszonen (163, 173) durch Nebenkanäle (164, 174) mit einem Querschnitt verlängert sind, der komplementär ist zu denen der Anschlußdrähte (220, 222) des Temperatursensors.

8. Fühler nach einem der Ansprüche 1 bis 7, dadurch gekennzeichnet, daß der Träger (100) eine mittige, elektrisch isolierende Wand (180) zwischen den Anschlußdrähten (220, 222) des Temperatursensors bildet.

9. Fühler nach einem der Ansprüche 1 bis 8, dadurch gekennzeichnet, daß er Lastrampen (120, 130) in Form eines Viertelzylinders aufweist.

10. Fühler nach einem der Ansprüche 1 bis 9, dadurch gekennzeichnet, daß er den Lastrampen (120, 130) gegenüberliegend geneigte Flächen (122, 132) aufweist, die imstande sind, als Anlage für die Anschlußdrähte (220, 222) des Temperatursensors zu dienen und die das Ende vor den Kanälen (112, 114) streifen, die in einem Ansatz (110) gebildet sind, um die Anschlußzungen (300) aufzunehmen.

11. Fühler nach einem der Ansprüche 1 bis 10, dadurch gekennzeichnet, daß die Anschlußdrähte (220, 222) des Temperatursensors auf den Anschlußzungen (300) durch Mikroschweißung befestigt sind.

12. Fühler nach einem der Ansprüche 1 bis 11, dadurch gekennzeichnet, daß der Träger (100) auf seiner Außenoberfläche mit vorspringenden Warzen (140) für seine Positionierung in der Form versehen ist.

13. Fühler nach einem der Ansprüche 1 bis 12, dadurch gekennzeichnet, daß er einen Schutzkörper aufweist, der auf den Träger (100) aufgeformt ist.

14. Fühler nach einem der Ansprüche 1 bis 13, dadurch gekennzeichnet, daß der Träger (100) eine mittige Wand zwischen den Anschlußdrähten (220, 222) des Temperatursensors bildet und dazu eingerichtet ist, als Anschlag in Form eines Temperatursensorkörpers (210) zu dienen.
